# DEMANDE DE BREVET EUROPEEN

(11) **EP 1 990 594 A1**
(43) Date de publication de la demande: **12.11.2008**
(21) Numéro de dépôt: 07301030.8
(22) Date de dépôt: 10.05.2007
(51) Int. Cl.: F28D 7/16, F28F 21/08, F23L 7/00

(54) **Echangeur de chaleur pour oxygène et son utilisation**

(71) Demandeur: L'AIR LIQUIDE, Société Anonyme pour l'Etude et l'Exploitation des Procédés Georges Claude, 75007 Paris (FR)
(72) Inventeur: Leroux, M. Bertrand, Paris Cedex 07 75321 (FR); Constantin, M. Gabriel, Paris Cedex 07 75321 (FR); Tsiava, M. Remi, Paris Cedex 07 75321 (FR); Douxchamps, M. Olivier, Jumet 6040 (BE); Symoens, M. Bruno, Jumet 6040 (BE); Baudelet, M. Eric, Jumet 6040 (BE)
(74) Mandataire: De Vleeschauwer, Natalie Y.L.D.

(57) **Abrégé**

La présente invention concerne un échangeur de chaleur pour alimentation en oxygène ou mélange gazeux comportant au moins 30% d'oxygène dont la température à la sortie de l'échangeur n'est pas inférieure à 300°C et de préférence supérieure à 400°C, l'oxygène ou gaz riche en oxygène alimentant une combustion dans un four industriel non-verrier, la chaleur des gaz de combustion étant utilisés directement ou indirectement ou la chaleur des produits chauds étant utilisée indirectement pour chauffer l'oxygène ou le gaz riche en oxygène dans l'échangeur, dans lequel la puissance d'échange est comprise entre 20 et 300kW, de préférence entre 40 et 250kW, et de manière particulièrement préférée entre 80 et 170kW

## Description

La présente invention concerne les échangeurs de chaleur destinés à chauffer de l'oxygène ou un gaz riche en oxygène, lesquels sont destinés à la comburation d'une combustion dans un four industriel, à l'exclusion des fours de fusion du verre, l'utilisation de ces échangeurs de chaleur pour alimenter cette combustion en oxygène ou en gaz riche en oxygène chaud et les procédés de combustion correspondants.

L'utilisation de brûleurs fonctionnant avec un combustible et de l'air conduit non seulement à une consommation énergétique importante, mais également au rejet de gaz de combustion volumineux. Pour ces raisons des efforts constants sont déployés pour réduire le plus possible les coûts énergétiques et ceux de traitement de ces gaz de combustion.

La pratique actuellement la plus répandue, qui utilise comme comburant l'air, ne conduit pas à la consommation d'énergie la plus faible possible du fait que l'azote de l'air est également porté à haute température et absorbe en conséquence une part significative de l'énergie libérée par la combustion, énergie dont une partie est perdue mêmes si les fumées font l'objet d'un récupération. Par ailleurs de manière bien connue la présence d'azote conduit à la formation des oxydes responsables des pluies dites acides.

Pour ces raisons des solutions mettant en oeuvre non pas de l'air mais de l'oxygène ou des gaz riches en oxygène ont été élaborées et trouvent déjà plusieurs applications.

L'utilisation systématique d'oxygène se heurte cependant à des difficultés pratiques et économiques. Pour les difficultés économiques intervient en premier le coût de l'oxygène nécessaire. Le gain en bilan d'énergie doit plus que compenser le coût supplémentaire de l'oxygène. Les investissements en matériel spécifique sont aussi d'importance dans l'économie du système, qu'il s'agisse des brûleurs, des alimentations ou, comme étudié ci-après, des échangeurs. En pratique, l'alimentation continue en oxygène de fours industriels non verriers nécessite soit le stockage sur site sous forme liquide, rempli périodiquement ou en fonction de la consommation des fours, soit des installations de production sur site, voire l'alimentation par gazoduc, ces deux dernières solutions conduisant à des investissements très importants.

Compte tenu des charges imposées par l'utilisation de l'oxygène, ou de gaz riche en oxygène, dans ces ensembles, pour atteindre un bilan économique satisfaisant, il est nécessaire d'optimiser les choix effectués.

Il apparaît que le meilleur bilan énergétique nécessite de faire fonctionner les brûleurs avec de l'oxygène et des combustibles préchauffés, en utilisant pour ce préchauffage une partie au moins des gaz de combustion.

La mise en pratique du préchauffage de l'oxygène requiert néanmoins des solutions nouvelles pour la constitution de ces installations comme pour leur conduite. Traditionnellement le préchauffage ne concerne que l'air des brûleurs, et est obtenu au moyen de dispositifs régénérateurs ou récupérateurs. Dans le premier cas, il s'agit de cavités remplies de matériaux réfractaires dans lesquelles on fait passer les gaz de combustion dans un premier temps pour chauffer les réfractaires, et dans lesquelles, dans un second temps, l'air utilisé dans la combustion est passé pour être réchauffé. Ces cavités sont la plupart du temps attenantes ou parties intégrantes des brûleurs et il n'est pas possible en pratique de les utiliser pour réchauffer l'oxygène car les régénérateurs sont systématiquement le siège de dépôts de particules véhiculées par les gaz de combustion, même si ceux-ci sont préalablement dépoussiérés. Le contact d'oxygène chaud avec ces dépôts n'est pas sans risques. Il est par ailleurs difficile de garantir une parfaite étanchéité de ces régénérateurs. Le passage d'air et les fuites éventuelles sont sans danger mais il n'en est pas de même pour ce qui concerne l'oxygène. Dans le cas des récupérateurs, l'air est préchauffé par échange avec les gaz de combustion, à des températures généralement inférieures à celles atteintes avec les dispositifs régénératifs. Les récupérateurs sont par ailleurs la plupart du temps détachés des brûleurs qu'ils alimentent et ne peuvent être utilisés tels quels pour le préchauffage de l'oxygène. Une autre possibilité est le préchauffage de l'air de combustion par échange direct avec la charge du four en sortie de l'installation.

En outre, l'utilisation d'échangeurs thermiques soulève aussi de délicats problèmes de résistance des matériaux au contact de l'oxygène chaud. Devant ces difficultés, et compte tenu des contraintes économiques, l'utilisation d'oxygène chaud n'a pas trouvé d'application significative dans les fours industriels non-verriers.

L'invention a donc pour but de proposer des solutions qui rende attractive l'utilisation d'oxygène, ou de gaz riches en oxygène chauds, pour la combustion dans un four industriel et en particulier dans les brûleurs de four industriel, à l'exclusion des fours de fusion du verre. L'invention se propose aussi de fournir des solutions qui rendent cette utilisation suffisamment sûre, en dépit des exigences techniques particulières qui s'attachent à la mise en oeuvre de l'oxygène à haute température.

Les risques liés à l'utilisation de l'oxygène se présentant dans l'installation à partir du moment ou la température s'élève, les inventeurs ont porté toute leur attention sur les dispositifs qui se situent au contact de cet oxygène chaud, et en particulier aux échangeurs qui renferment des quantités importantes de cet oxygène et dont la construction doit permettre un fonctionnement sans défaillance pendant de très longues périodes en raison des difficultés que représentent toute intervention de maintenance ou réparation.

Les considérations précédentes relatives à l'utilisation d'oxygène chaud, s'appliquent aussi aux mélanges gazeux, notamment avec de l'air, dans lesquels la teneur en oxygène est suffisamment élevée. En pratique, pour que l'utilisation de ces mélanges gazeux reste avantageuse, leur teneur en oxygène n'est pas inférieure à 30%. Cette condition s'applique à l'invention présentée dans la suite. De façon préférée, l'invention s'applique à des mélanges gazeux dont la teneur en oxygène est d'au moins 50%, et plus de préférence encore d'au moins 80%.

Selon l'invention, le chauffage de l'oxygène, ou du gaz riche en oxygène, pour l'alimentation en comburant de la combustion dans le four industriel, et en particulier pour l'alimentation en comburant des brûleurs de four industriel, à l'exception des fours de fusion de verre, est conduit dans des échangeurs dont la puissance d'échange est volontairement limitée, sans pour autant minimiser la température à laquelle l'oxygène ou le gaz riche en oxygène est porté.

Parmi les fours industriels non-verriers concernés par cette invention, on compte un grand nombre d'installations non verrières dont les gaz de combustion ont une température au moins égale à 700°C, plus généralement supérieures à 900°C, notamment les fours à arc électrique, les fours de réchauffage, les fours et précalcinateurs de cimenterie, les fours de recyclage ou de refusion des métaux non ferreux, les fours de traitement des minerais de métaux non ferreux et les four de fabrication de céramiques.

Pour bénéficier suffisamment de l'avantage sur le bilan énergétique, la température de l'oxygène ou du gaz riche en oxygène à la sortie de l'échangeur n'est pas inférieure à 300°C et de préférence pas inférieure à 400°C, et la puissance échangée dans l'échangeur pour porter l'oxygène à ces températures selon l'invention est comprise entre 20 et 300kW, de préférence comprise entre 40 et 250kW et de façon particulièrement préférée entre 80 et 170kW.

Des puissances inférieures à celles préconisées sont nettement moins économiques et rendent le système peu compétitif. Des puissances plus élevées sont susceptibles de conduire à des difficultés pour ce qui concerne la commodité et surtout la sécurité de mise en oeuvre de ces échangeurs.

Dans les fours traditionnels non-verriers, les brûleurs mis en oeuvre développent des puissances importantes de l'ordre de 500 kW à 10 MW conduisant à une consommation d'oxygène de l'ordre de 100 à 2000Nm³ d'oxygène par heure.

Compte tenu de la puissance et par suite de la consommation de chacun des brûleurs utilisés dans ces fours, les échangeurs selon l'invention ne sont associés qu'à un nombre limité de brûleurs. Chaque échangeur n'alimente en oxygène chaud, ou gaz riche en oxygène, qu'avantageusement et simultanément, au plus trois brûleurs distincts, chaque brûleur pouvant comporter plusieurs buses d'injection suivant les modalités telles qu'elles sont présentées par exemple dans EP 1194 719.

De manière analogue, quand les échangeurs suivant l'invention alimentent des lances d'injection d'oxygène ou de gaz riche en oxygène, chaque échangeur n'alimente en oxygène chaud, ou en gaz chaud riche en oxygène, qu'avantageusement et simultanément, au plus trois lances distinctes.

Cette disposition qui conduit à multiplier les échangeurs, est garante d'une meilleure sécurité de l'installation par la limitation des dimensions et de la capacité de chaque échangeur, mais aussi de façon significative de la longueur des canalisations en aval des échangeurs et conduisant jusqu'aux brûleurs ou lances.

Pour être avantageuse du point de vue économique, la mise en oeuvre des échangeurs selon l'invention doit de préférence conduire à des dimensions limitées, ce qui implique un mode de fonctionnement bien déterminé et en particulier, le fait que leur conduite permet de développer la puissance requise tout en maintenant la surface d'échange aussi petite que possible.

Selon l'invention les échangeurs pour chauffer l'oxygène, ou le gaz riche en oxygène, présentent avantageusement une puissance par unité de surface de contact de l'oxygène avec les parois d'échange comprise entre 5 et 15kW/m², et de préférence comprise entre 7 et 12kW/m². La surface considérée est celle de la paroi qui sépare l'oxygène ou le gaz riche en oxygène du gaz caloporteur.

La construction des échangeurs utilisés selon l'invention doit présenter une structure aussi simple que possible pour éviter les risques d'érosion et de fuite, en raison de l'agressivité de l'oxygène chaud vis-à-vis de matériaux mis en oeuvre. Les échangeurs selon l'invention sont de préférence de type tubulaire, l'oxygène, ou le gaz riche en oxygène, circule dans un faisceau de tubes à l'extérieur desquels circule le gaz caloporteur.

Pour garantir les puissances indiquées précédemment, et en particulier les puissances par unité de surface, en maintenant ces surfaces aussi petites que possible, il est nécessaire d'optimiser les conditions d'échange thermique.

Un premier moyen pour favoriser cet échange consiste à accroître la vitesse de circulation des gaz et en particulier de l'oxygène, ou du gaz riche en oxygène. Dans cette perspective cependant il est nécessaire encore une fois de tenir compte de ce que l'accroissement de la vitesse est un facteur de risque. Le risque est d'autant plus significatif que l'oxygène chaud est susceptible d'entraîner des particules qui peuvent réagir avec l'oxygène et/ou dont l'impact sur les parois favorise une érosion rapide qui s'ajoute à celle qui résulte de la friction de l'oxygène lui-même.

Pour tenir compte de ce risque, selon l'invention, les dimensions des éléments de l'échangeur sont avantageusement fixées de telle sorte que pour obtenir la puissance nécessaire, la vitesse de l'oxygène ou du gaz riche en oxygène ne soit pas supérieure à 120m/s en aucun point de l'échangeur, et de préférence ne soit pas supérieure à 100m/s.

Outre la température et la vitesse de l'oxygène, on sait que le risque d'inflammation notamment est encore dépendant de la pression. Si une augmentation de pression conduit à réduire le volume, et par suite la vitesse dans l'échangeur, une modification de cette nature est aussi conditionnée par les caractéristiques de fonctionnement des brûleurs ou des lances d'injection qui peuvent être utilisés dans les fours considérés. En pratique il est très délicat de procéder à la détente de l'oxygène chaud après le passage dans l'échangeur et avant qu'il n'atteigne le brûleur ou la lance. Par nature, il ne permet pas de façon sûre le passage dans des détendeurs, et même l'usage de diaphragmes pour réaliser cette opération n'est pas recommandé, toujours en raison de son agressivité. Une forte pression au niveau de la ou des buses d'injection du brûleur, pour maintenir un débit adéquat, conduirait à réduire l'ouverture de cette ou ces buses. Ceci n'est pas souhaitable en raison du risque d'encrassement et/ou d'usure de ces buses, conduisant rapidement à un fonctionnement défectueux.

Pour tenir compte de ces facteurs, les échangeurs selon l'invention sont aussi dimensionnés de telle sorte que, pour les puissances recherchées, la pression de l'oxygène ou du gaz riche en oxygène, dans l'échangeur ne dépasse pas 3 bars et de préférence pas 2 bars et de façon particulièrement préférée 1,5 bar.

Les études sur les modalités de conduite de ces installations montrent que les meilleurs bilans énergétiques nécessitent de porter les combustibles et comburants à une température élevée. Les températures auxquelles les gaz doivent être portés, sont aussi élevées que le permettent les installations utilisées.

S'il est avantageux du point de vue de l'efficacité de la combustion de porter l'oxygène aux températures les plus élevées, ces dernières sont limitées en pratique d'une part par la température du fluide caloporteur participant à l'échange, et d'autre part par la nécessité de limiter les risques de corrosion ou même d'inflammation des matériaux au contact de l'oxygène.

L'apport énergétique pour chauffer l'oxygène ou le gaz riche en oxygène peut provenir des produits chauds en sortie du four, tels que, selon le cas, les métaux, le ciment, les minerais ou les produits céramiques, qui sont refroidit par un fluide intermédiaire qui transmet ensuite l'énergie à l'oxygène ou au gaz riche en oxygène.

L'apport énergétique pour chauffer l'oxygène ou le gaz riche en oxygène peut aussi provenir des gaz de combustion, soit directement par circulation dans l'échangeur, soit de préférence indirectement par l'intermédiaire d'un fluide ayant lui-même été réchauffé préalablement par un échange avec les gaz de combustion.

Cette dernière façon de procéder présente une sécurité supplémentaire en cas de défaut d'étanchéité dans la circulation de l'oxygène. Elle permet aussi d'éviter l'encrassement rapide de l'échangeur, les gaz de combustion entraînant avec eux une quantité importante de poussières qu'il est difficile de séparer complètement.

Le gaz intermédiaire dans l'éventualité de ce double échange est avantageusement inerte vis-à-vis de l'oxygène. Il s'agit de préférence d'air, d'azote, de CO₂, de vapeur d'eau ou de mélange de ces gaz.

Le cas échéant le gaz intermédiaire peut être constitué d'un mélange des gaz inertes indiqués ci-dessus et d'une partie des gaz de combustion préalablement dépoussiérés.

La température des fumées peut s'élever jusqu'à 1550°C et se situe le plus souvent entre 1250 et 1450°C, et sont supérieures aux températures auxquelles l'oxygène peut être porté sans dégrader trop intensément le matériau des parois avec lequel il entre en contact.

Pour une installation comportant un double échange (d'une part, échange entre produits chauds ou gaz de combustion et fluide caloporteur et, d'autre part, échange entre fluide caloporteur et oxygène ou gaz riche en oxygène), le fluide caloporteur étant typiquement constitué d'air, la température de ce dernier après réchauffement par les gaz de combustion, est de préférence comprise entre 450 et 1000°C, et de façon particulièrement préférée entre 600 et 800°C.

Comme il ressort clairement des études des inventeurs, qui font l'objet des essais rapportés plus loin, la corrosion des matériaux constituant l'échangeur de chaleur, croît rapidement avec la température, de sorte qu'il est préférable de maintenir l'oxygène dans des conditions qui garantissent contre une corrosion excessive.

En pratique la température de l'oxygène chaud, ou des gaz riches en oxygène, telle qu'elle résulte des échanges de chaleur, reste dans des limites pour lesquelles le choix des matériaux effectué selon l'invention permet d'éviter une corrosion excessive de l'installation. Cette température ne dépasse pas ordinairement 900°C, et de préférence est au plus de 700°C.

Les matériaux constituant l'échangeur, et en premier lieu ceux au contact de l'oxygène chaud doivent être choisis de manière à garantir une bonne résistance à l'oxydation par les gaz et notamment l'oxygène dans ces conditions de température.

Les aciers les plus usuels ne sont pas suffisamment résistants. En conséquence il est nécessaire de procéder à une sélection particulièrement rigoureuse pour garantir la pérennité des installations.

Dans le choix des matériaux intervient non seulement la résistance aux températures les plus hautes atteintes dans ces installations, mais encore une bonne tenue aux températures moindres mais qui sont connues pour causer un changement d'état du matériau le rendant particulièrement sensible aux possibles dégradations. Lors de la montée en température certains aciers en particulier passent par des zones de température de transition qui fragilisent le métal (phénomène désigné sous le nom de "embrittlement").

La résistance recherchée comporte plusieurs aspects. Il ne s'agit pas seulement de prévenir une oxydation violente des matériaux sous forme de combustion de ceux-ci, il s'agit aussi de prévenir une altération de la surface en contact avec l'oxygène, altération qui non seulement à terme peut conduire à la perforation des parois mais bien plus, il convient dans certains cas de prévenir l'arrachage de particules qui sont susceptibles de perturber la réaction ultérieure et/ou de polluer les produits préparés au moyen de la combustion entretenue avec cet oxygène chaud.

Dans tous les cas, l'installation dans laquelle circulent les gaz riches en oxygène doit être réalisée dans des matériaux de nature à offrir la résistance voulue à ces gaz par nature particulièrement agressifs, et qui le sont d'autant plus que la température, la vitesse et la pression sont plus élevées.

Pour que l'échangeur utilisé chauffant l'oxygène ou le gaz riche en oxygène puisse satisfaire de façon durable aux conditions d'utilisation énoncées ci-dessus, les inventeurs ont établi les caractéristiques auxquelles doivent répondre les matériaux qui les constituent.

De façon générale, selon l'invention l'échangeur devant recevoir des gaz tels que décrits ci-dessus comprenant au moins 30% d'oxygène à une température qui n'est pas inférieure à 300°C, est constitué, au moins pour les parois directement en contact avec ces gaz, d'un alliage métallique qui satisfait au protocole d'épreuve suivant.

Un échantillon de l'alliage métallique selon l'invention placé dans une atmosphère correspondant à l'oxygène ou au gaz riche en oxygène devant circuler dans l'installation et à la température la plus élevée rencontrée dans l'installation, ne présente pas un gain de poids de plus de 0,1mg/cm² de surface exposée après 1000 cycles comprenant chacun le maintien à la température maximale prévue pendant 1 heure, chaque palier à cette température étant suivi d'un retour à la température ambiante.

Le choix du passage réitéré par des températures élevées suivi d'un retour à la température ambiante est particulièrement exigeant. Les structures du métal peuvent en particulier rencontrer des modifications de phases répétées qui engendrent les contraintes les plus fortes, et donc les risques de dégradations accrus. Dans la pratique ce test est tel qu'il soumet le métal à des épreuves plus importantes que celles supportées dans l'usage de l'échangeur industriel lui-même, lequel est destiné à fonctionner en continu, ce fonctionnement n'étant interrompu qu'occasionnellement pour des opérations de maintenance les plus espacées possible dans le temps.

Comme indiqué précédemment, l'alimentation des brûleurs ou des lances étant de préférence réalisée avec un gaz dont la teneur en oxygène n'est pas inférieure à 30 et est de préférence supérieure à 50%, voir 80%, et peut atteindre 100%, le test indiqué ci-dessus doit avantageusement être satisfait pour ces teneurs en oxygène

Pour garantir au mieux la longévité de l'échangeur, l'alliage métallique choisi supporte le même test mais dont la température de consigne est d'au moins 500°C, et pour satisfaire aux conditions extrêmes envisagées, l'alliage satisfait au test dans lequel cette température d'épreuve la plus élevée est d'au moins 600°C, et peuvent passer ce test même pour des températures de 800°C.

De manière complémentaire, les alliages les plus adéquats pour réaliser l'échangeur selon l'invention, dans une épreuve d'auto-combustion en atmosphère oxydante, épreuve correspondant à la norme ASTM G-124, résistent à cette combustion au moins jusqu'à des pressions de 3 bars, et de préférence au moins jusqu'à des pressions de 10 bars.

Parmi les alliages avantageusement utilisés et répondant positivement au test de corrosion, lorsqu'ils sont utilisés dans de gammes de température supérieures à 550°C, figurent des alliages inoxydables de type ferritique, dont la teneur en Cr est comprise entre 12 et 30% en poids, et qui comportent simultanément de l'Al à raison de 1 à 8%.

Pour les alliages de type ferritique, ils se fragilisent lorsqu'ils sont dans des gammes de température comprises entre 400 et 500°C ("embrittlement"). Pour ces raisons la mise en oeuvre de ces alliages doit tenir compte des pièces considérées et des conditions, notamment de température, régnant dans l'échangeur.

Les parties de l'échangeur exposées à l'oxygène chaud peuvent aussi être réalisées dans des alliages riches en Ni et Cr, et comprenant des teneurs en Ni supérieures à 25% en poids et comportant simultanément de 10 à 30% de Cr. La teneur en Ni peut s'élever à 75% ou d'avantage.

Ces alliages diffèrent les uns des autres notamment dans leurs propriétés mécaniques. Par ailleurs dans leur choix, il faut éventuellement tenir compte de limitations propres à l'utilisation envisagée.

Pour des gammes de températures d'oxygène supérieures à 500°C, et notamment comprises entre 500 et 700°C il est préférable d'utiliser des alliages dont la teneur en chrome n'est que de 10 à 20% et de façon particulièrement préférée entre 10 et 16%. Des alliages riches en Ni répondant aux exigences énoncées sont notamment ceux désignés sous les noms usuels de Inconel 600H, 600L, Incoloy 800H

Pour des gammes de températures d'oxygène supérieures à 100°C, et notamment comprises entre 100 et 600°C il est préférable d'utiliser des alliages dont la teneur en chrome est supérieure à 16% et de façon particulièrement préférée entre 20 et 30%. Des alliages riches en Ni répondant aux exigences énoncées sont notamment ceux désignés sous les noms usuels de Inconel 600H, 600L, 601, 617, 625, Incoloy 800HT

Il est encore possible d'utiliser un alliage tel que les aciers inox 316L et 310, faciles à travailler, mais la longévité est alors moins bien garantie.

Si la vitesse de circulation des gaz très oxydants à température élevée est un facteur de risque d'érosion, celle-ci peut être accrue par des particules véhiculées par ces gaz. Initialement les gaz sont bien dépourvus de particules solides, mais celles-ci peuvent provenir de l'installation elle-même. Les parois des canalisations et des échangeurs thermiques soumis à la corrosion de ces gaz peuvent en effet libérer des particules dont l'impact sur les éléments en aval est aussi générateur d'érosion et d'autant plus forte que la vitesse des gaz est plus élevée.

L'état de surface des parois de l'échangeur est susceptible d'influer sur la résistance à la corrosion. Plus les irrégularités de surface sont prononcées, plus l'alliage est corrodé, les autres conditions étant identiques. Pour cette raison les surfaces des parois de l'échangeur selon l'invention au contact des gaz riches en oxygène sont polies et ne présentent pas une rugosité de plus de 6 micromètres (µ). De préférence la rugosité est inférieure à 4µ et le plus avantageusement est au plus égale à 2µ.

La présente invention concerne également l'utilisation d'un échangeur suivant l'une quelconque des formes de réalisations décrites ci-dessus pour chauffer de l'oxygène ou un mélange gazeux comportant au moins 30% d'oxygène jusqu'à une température à la sortie de l'échangeur qui n'est pas inférieure à 300°C et de préférence supérieure à 400°C, l'oxygène ou le gaz riche en oxygène ainsi chauffé alimentant une combustion dans un four industriel non-verrier.

L'invention concerne aussi les procédés de combustion dans des fours industriels non-verriers suivant ces différentes formes de réalisation. L'invention couvre ainsi un procédé de combustion dans un four industriel non-verrier avec obtention de produits chauds et de gaz de combustion, ledit procédé comprenant les étapes de :
- chauffer de l'oxygène ou un mélange gazeux comportant au moins 30% d'oxygène dans un échangeur de chaleur suivant l'invention jusqu'à une température à la sortie de l'échangeur qui n'est pas inférieure à 300°C et de préférence supérieure à 400°C, et ceci, comme déjà décrit, par échange de chaleur directe ou indirecte avec au moins une partie des gaz de combustion ou par échange indirect avec au moins une partie des produits chauds et
- alimenter l'oxygène ou le gaz riche en oxygène chauffé dans le four industriel en tant que comburant pour la combustion.

Les différents paramètres, tels que les températures, pressions, vitesses d'écoulement, etc., décrits ci-dessus par rapport à l'échangeur de chaleur, peuvent évidemment également être appliqués à l'utilisation et au procédé ci-dessus.

Le four industriel non-verrier peut être choisi parmi les fours à arc électrique, les fours de réchauffage, les fours et précalcinateurs de cimenterie, les fours de recyclage ou de refusion des métaux non ferreux, les fours de traitement des minerais de métaux non ferreux et les fours de fabrication de céramiques.

Des exemples de détails de réalisation de l'invention sont donnés dans la suite de la description, en faisant référence à la planche de dessins dans laquelle :
- la figure 1 est une illustration schématique en coupe d'un échangeur gazeux utilisable selon l'invention pour réchauffer de l'oxygène ou un gaz riche en oxygène ;
- la figure 2 est une vue partielle agrandie, de l'extrémité de l'échangeur présenté à la figure 1 ;
- la figure 3 présente un détail de la coupe partielle A de la figure 2.

La structure générale de l'échangeur est de type traditionnel pour les échangeurs gazeux. Elle comporte une enceinte 1 enveloppant un faisceau de tubes 2. Les tubes sont fixés à l'intérieur de l'enceinte par des platines 3, 4.

Les platines forment une paroi étanche délimitant la zone de l'enceinte dans laquelle circule le gaz caloporteur.

A ses extrémités l'enceinte est close par deux chapeaux 5, 6. Ces chapeaux sont fixés à l'enceinte de manière étanche, par l'intermédiaire de brides 7, 8, 9, 10 et de joints. Ces brides peuvent être démontées pour donner accès le cas échéant aux extrémités des tubes 2.

Pour obtenir le meilleur échange possible la circulation du gaz caloporteur et de l'oxygène ou du gaz riche en oxygène s'effectue avantageusement à contre-courant. Les gaz caloporteur chaud pénètre dans l'enceinte par le conduit 11, et ressort par le conduit 12 après avoir parcouru le circuit aménagé par des chicanes 13, 14, 15 à l'intérieur de l'enceinte.

L'oxygène ou le gaz riche en oxygène, circule dans les tubes 2 suivant un trajet essentiellement rectiligne. Il pénètre froid par l'extrémité 16, et ressort chaud à l'extrémité 17 pour être conduit aux brûleurs.

L'échange est d'autant plus efficace que les vitesses de circulation sont plus élevées. Néanmoins la vitesse et la pression de l'oxygène doivent être maintenues dans des limites qui garantissent la sécurité de fonctionnement du dispositif. Il faut éviter que la circulation de l'oxygène conduise à une érosion excessive des parois avec lesquelles il est en contact. Il convient aussi de faire en sorte que dans son écoulement l'oxygène ne heurte pas les parois. L'utilisation de tubes rectilignes limite ainsi l'érosion.

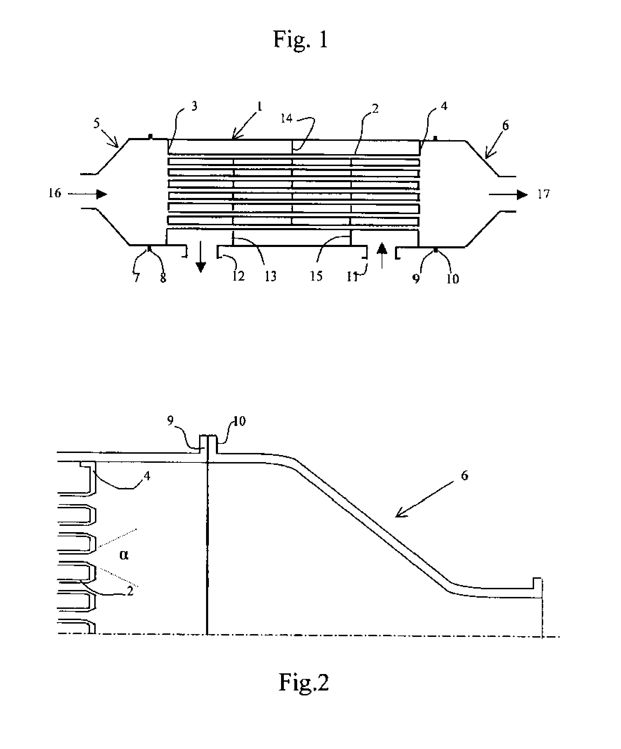

La disposition des extrémités des tubes 2 est détaillée à la figure 2.

Pour éviter les turbulences aux extrémités des tubes, avec les risques d'érosion accentuée au point où ces tubes se raccordent à la platine 4, le plus souvent par des soudures appropriées, ces tubes s'achèvent par une partie évasée. Cette disposition facilite l'écoulement de l'oxygène et son expansion et par suite un certain ralentissement. Sur la figure cet évasement est de forme tronconique avec un angle d'ouverture ά.

Pour la même raison les chapeaux, et surtout le 6 disposé à la sortie de l'oxygène, sont situés à distance des extrémités des tubes 2. De cette façon la vitesse de l'oxygène le long des parois du chapeau est sensiblement réduite par rapport à celle qu'elle présente à la sortie des tubes.

La forme générale de ce chapeau 6 est aussi choisie de telle sorte que la progression de l'oxygène chaud rencontre la paroi du chapeau suivant une incidence faible minimisant l'impact. La paroi du chapeau fait par exemple un angle d'environ 20 à 30 degrés par rapport à la direction des tubes 2. La section du chapeau va en se réduisant progressivement jusqu'au raccord avec la canalisation de sortie.

Il est aussi avantageux de faire en sorte d'éviter dans cette partie les angles vifs ou les soudures.

Le dimensionnement des tubes et leur distribution sont tels que les conditions de vitesse et de pression indiquées précédemment soient remplies pour les débits mis en oeuvre.

L'échangeur devant fonctionner en continu sur de très longues périodes, en dépit des précautions visant à éviter l'usure des éléments qui le constituent, il peut arriver qu'un tube ne présente plus l'étanchéité nécessaire. L'échangeur est assemblé de telle façon que le tube défaillant puisse être obstrué à ces deux extrémités. L'opération nécessite la dépose des chapeaux. Après la mise hors service du tube défaillant l'échangeur est de nouveau utilisable avec une efficacité peu modifiée en proportion du nombre de tubes actifs restant.

L'étanchéité au niveau des brides des chapeaux 9, 10, de l'échangeur, ou au raccordement de ces chapeaux avec les canalisations d'amenée ou de sortie de l'oxygène, est avantageusement obtenue au moyen d'un joint annulaire 18 métallique, garni d'un matériau résistant à l'oxygène 19, 20. Le matériau en question est par exemple du mica ou un matériau minéral compressible. Des joints de ce type sont produits notamment par la société Garlock sous le nom commercial de "Vitaflex"

Afin de déterminer les alliages satisfaisant aux conditions de mise en oeuvre selon l'invention, les inventeurs ont procédé aux essais reportés dans la suite de la description.

Pour ces essais les échantillons sont constitués de plaques d'alliages métalliques de 2mm d'épaisseur et de 20x20mm.

L'état de surface des échantillons montre une importance certaine quant à la sensibilité à l'oxydation. Pour cette raison une face de chacune de ces plaques est polie avec une feuille abrasive de SiC jusqu'au grain 1200. L'autre face est laissée dans son état d'origine, celui issu du laminage industriel.

La composition pondérale des échantillons des alliages essayés est reportée dans le tableau suivant :

| alliage | Fe | C | Si | Cr | Al | Ni | Mn | autres |
|---|---|---|---|---|---|---|---|---|
| I | 6-10 | 0,15 | 0,5 | 14-17 | | 72 | | 0,5Cu |
| II | Comp | <0,04 | <1,0 | 19-23 | 0,15-0,6 | 30-34 | <1,5 | 0,15-0,6Cu |
| III | Comp | | | 20 | 5,5 | | | 0,5Ti |
| | | | | | | | | 0,5Y₂O₃ |
| IV | Comp | 1-2 | | 24 | 1-2 | | | |
| V | Comp | | | 22 | 5 | | | |
| VI | Comp | 0,15 | | 23-27 | <1,0 | | 1,5 | |

La mesure de l'oxydation des échantillons est évaluée par l'accroissement de la masse de ceux-ci après l'épreuve des mille cycles. Les résultats pour différentes températures de palier sont reportés dans le tableau suivant :

| Alliage | I | | | V | | |
|---|---|---|---|---|---|---|
| Température | 550 | 650 | 800 | 550 | 650 | 800 |
| mg/cm² | 0,013 | 0,06 | 0,347 | 0,004 | 0,02 | 0,099 |
| | | | | | | |

| Alliage | III | | | IV | | |
|---|---|---|---|---|---|---|
| Température | 550 | 650 | 800 | 550 | 650 | 800 |
| mg/cm² | 0,097 | 0,10 | 0,232 | 0,026 | 0,05 | 0,103 |

De ces essais on remarque que l'oxydation est d'autant plus importante que la température de palier est plus élevée. A 550°C l'accroissement, dans tous les cas, reste très inférieur à 0,1 mg/cm2. A 650°C un seul échantillon atteint cette valeur. A 800°C les échantillons les plus résistants sont les échantillons des alliages IV et V.

L'observation métallographique des échantillons montre une tendance à l'oxydation beaucoup moindre pour la face polie des échantillons.

Les mesures précédentes comportent simultanément l'oxydation des deux faces de l'échantillon. Une seule face étant polie, la mesure de l'oxydation obtenue est en conséquence supérieure à celle que l'on observerait en pratique, lorsque la surface en contact avec l'oxygène est polie.

Les essais étant conduits de manière statique, autrement dit sans circulation de l'atmosphère par rapport à l'échantillon, il n'apparaît pas "d'écaille" détachée de la surface.

L'analyse de la modification des compositions à la surface, et en particulier la diminution de la teneur en Cr est un moyen d'appréciation du risque de formation de particules détachables. La présence de Cr à une teneur qui n'est pas inférieure à 7% garantit la formation d'une couche protectrice prévenant la formation d'écailles.

Les mesures rapportées dans le tableau suivant montrent que la teneur en Cr reste très supérieure à ces valeurs. Après l'épreuve de 1000 cycles dont les paliers sont aux températures maximales indiquées, l'analyse en pourcentages pondéraux des échantillons, en surface (S) et au coeur (C) du produit conduit aux résultats indiqués dans le tableau suivant:

| alliage | °C | | Cr | Si | Al | Fe | Ti | Mn | Ni |
|---|---|---|---|---|---|---|---|---|---|
| III | 800 | S | 17,9 | | 6,3 | 72,7 | 0,4 | 0,1 | |
| | | C | 19 | | 5,6 | 73,6 | 0,5 | 0,0 | |
| IV | 800 | S | 22,1 | 0,8 | 2,1 | 72,1 | 0,0 | 0,4 | |
| | | C | 23,1 | 0,8 | 1,9 | 71,9 | 0,3 | 0,4 | |
| IV | 550 | S | 18,6 | 0,7 | 1,8 | 75,8 | 0,0 | 0,3 | |
| | | C | 23,7 | 0,8 | 1,9 | 71,8 | 0,0 | 0,4 | |
| V | 800 | S | 20 | 0,0 | 6,3 | 71,0 | 0,0 | 0,1 | |
| | | C | 21,5 | 0,0 | 5,6 | 71,4 | 0,0 | 0,1 | |
| I | 800 | S | 10,9 | 0,2 | | 8,8 | | | 79,5 |
| | | C | 15,7 | 0,2 | | 7,9 | | | 75,5 |
| I | 550 | S | 15,6 | 0,1 | | 7,5 | | | 75 |
| | | C | 15,9 | 0,1 | | 8,0 | | | 74,2 |

Compte tenu de la nature de l'atmosphère envisagée, la mise en oeuvre des matériaux doit satisfaire à de rigoureuses conditions de sécurité. Le risque de combustion du matériau porté à température élevée en présence d'oxygène pur est évalué à cet effet en suivant le protocole de la norme ASTM G 124.

Dans ces essais des barreaux de matériau placés dans une atmosphère d'oxygène sous pression sont soumis à une épreuve de combustion. Les résultats de ces essais montrent qu'à 550°C et sous une pression de 3 bars aucun des échantillons ne donne lieu à combustion.

Lorsque la pression ou la température est augmentée, la tendance à la combustion s'accroît. L'alliage III se révèle le plus sensible à cette épreuve.

De manière générale aux températures envisagées précédemment la pression ne doit pas dépasser 10 bars quel que soit l'alliage choisi. A cette condition l'épreuve selon la norme montre que l'utilisation dans les installations d'alimentation en gaz riche en oxygène, n'entraîne pas de risque de combustion.

En fonction des résultats de ces essais de résistance à l'oxygène chaud, il apparaît de façon particulièrement intéressante que dans un échangeur selon l'invention l'épaisseur des parois peut être relativement moins épaisse que ne le laissait supposer l'art antérieur. Des simulations de longévité basées sur ces résultats, conduisent à des parois pour les tubes des échangeurs selon l'invention, dont l'épaisseur peut ne pas être supérieure à 3mm. Cette épaisseur peut même être égale ou inférieure à 2,5mm.

L'épaisseur relativement faible des parois des tubes de l'échangeur, favorise le transfert thermique et par suite accroît la puissance disponible pour une même surface d'échange.

A titre d'exemple de réalisation, un échangeur selon l'invention est constitué de la façon suivante. Il est formé d'un faisceau de 40 tubes d'Inconel 600. Le diamètre extérieur des tubes est 17,2mm et l'épaisseur de paroi de 2,3mm. Les tubes ont une longueur de 4000mm.

La surface d'échange au contact de l'oxygène est alors de 8,4m².

Venant d'un premier échangeur le gaz caloporteur (de l'air dépoussiéré) entre dans l'échangeur à une température de 650°C. Le débit de gaz caloporteur est établi à 750Nm³/h. Le débit d'oxygène est de 400Nm³/h. Entrant à température ambiante l'oxygène est chauffé à 550°C.

La vitesse de l'oxygène dans les canalisations est de 67m/s, et la perte de charge dans l'échangeur est inférieure à 0,15bar. Un système de sécurité comportant un pressostat, maintien la pression dans l'échangeur à moins de 1bar.

La puissance nominale de l'échangeur est de 84kW, celle par unité de surface s'établit à 9,7kW/m².

L'échangeur alimente en oxygène un brûleur de four industriel non-verrier, d'une puissance de 2MW.

Le four complet est alimenté en oxygène par 10 échangeurs dimensionnés de manière semblable. La puissance de chacun de ces échangeurs est adaptée pour distribuer au mieux la puissance totale nécessaire à la conduite du four.

## Revendications

1. Echangeur de chaleur pour alimentation en oxygène ou mélange gazeux comportant au moins 30% d'oxygène dont la température à la sortie de l'échangeur n'est pas inférieure à 300°C et de préférence supérieure à 400°C, l'oxygène ou gaz riche en oxygène alimentant une combustion dans un four industriel non-verrier, la chaleur des gaz de combustion étant utilisée directement ou indirectement ou la chaleur des produits chauds étant utilisée indirectement pour chauffer l'oxygène ou le gaz riche en oxygène dans l'échangeur, dans lequel la puissance d'échange est comprise entre 20 et 300kW, de préférence entre 40 et 250kW, et de manière particulièrement préférée entre 80 et 170kW.

2. Echangeur selon la revendication 1 dans lequel la puissance par unité de surface d'échange au contact de l'oxygène ou du gaz riche en oxygène est comprise entre 5 et 15kW/m², et de préférence entre 7 et 12kW/m².

3. Echangeur selon l'une des revendications précédentes alimentant au plus trois brûleurs ou lances du four.

4. Echangeur selon l'une des revendications précédentes de type tubulaire dans lequel l'oxygène ou le gaz riche en oxygène circule dans les tubes dont les parois externes sont en contact avec un gaz caloporteur.

5. Echangeur selon la revendication 4 dans lequel la section totale des tubes canalisant l'oxygène ou le gaz riche en oxygène est telle que la vitesse la plus élevée dans ces tubes ne dépasse pas 120m/s, et de préférence pas 100m/s.

6. Echangeur selon l'une des revendications précédentes dans lequel la pression de l'oxygène ou du gaz riche en oxygène est maintenue inférieure à 3 bars, de préférence inférieure à 2 bars et de façon particulièrement préférée pas supérieure à 1,5 bar.

7. Echangeur selon l'une des revendications précédentes dans lequel les surfaces en contact avec l'oxygène ou le gaz riche en oxygène sont polies de telle sorte que leur rugosité ne dépasse pas 6µ, de préférence ne dépasse pas 4µ et de façon particulièrement préférée ne dépasse pas 1µ.

8. Echangeur selon la revendication 7 dans lequel les tubes dans lesquels circule l'oxygène ou le gaz riche en oxygène sont sensiblement droits et leurs parois présentent une épaisseur qui n'est pas supérieure à 3mm et de préférence pas supérieure à 2,5mm.

9. Echangeur selon l'une des revendications 4 à 8 dans lequel l'enceinte enveloppant les tubes est constituée de plusieurs éléments réunis par des brides, l'étanchéité étant assurée au niveau de ces brides par des joints composites dont l'élément d'étanchéité est en matériau inerte à l'oxygène.

10. Echangeur selon la revendication 9 dans lequel l'élément d'étanchéité est une bague composée de matériau minéral compressible.

11. Echangeur selon l'une des revendications précédentes dans lequel le chauffage de l'oxygène ou du gaz riche en oxygène est effectué de manière indirecte par les gaz de combustion ou les produits chauds, un premier échange entre ces gaz de combustion ou produits chauds étant effectué avec un gaz caloporteur intermédiaire lequel est ensuite acheminé vers l'échangeur pour chauffer l'oxygène ou le gaz riche en oxygène, le gaz caloporteur étant constitué par un gaz inerte vis-à-vis de l'oxygène.

12. Echangeur selon la revendication 11 dans lequel le gaz caloporteur est de l'air, de l'azote, du CO₂ ou de la vapeur d'eau.

13. Echangeur selon la revendication 11 dans lequel le gaz caloporteur est constitué de gaz de combustion dilués au moyen au moins d'un des gaz air, azote, CO₂ et vapeur d'eau.

14. Echangeur selon la revendication 11 dans lequel le gaz caloporteur est d'abord chauffé dans un récupérateur, lequel est chauffé préalablement par les gaz de combustion.

15. Echangeur selon l'une des revendications précédentes dans lequel le matériau des surfaces au contact avec l'oxygène, ou le gaz riche en oxygène, est constitué d'un alliage métallique tel qu'un échantillon exposé au gaz chaud ne présente pas un gain de poids de plus de 0,1mg/cm² après 1000 cycles d'exposition, chaque cycle comprenant une élévation de la température jusqu'à une valeur égale ou supérieure à 400°C, le maintien de cette température palier pendant une heure, et le retour à la température ambiante.

16. Echangeur selon la revendication 15 dans lequel l'alliage satisfait à la condition de gain de poids inférieur à 0,1mg/cm² de surface exposée, lorsque dans l'épreuve à l'atmosphère oxydante la température palier est d'au moins 500°C.

17. Echangeur selon l'une des revendications 15 et 16 dans lequel l'alliage au contact avec l'oxygène ou le mélange gazeux à base d'oxygène, est un alliage de type acier ferritique présentant une teneur pondérale en Cr de 12 à 30%, et une teneur en Al de 1 à 8%.

18. Echangeur selon l'une des revendications 15 et 16 dans lequel l'alliage au contact de l'oxygène ou du mélange à base d'oxygène pour une température d'oxygène ne dépassant pas 500°C, est un alliage comportant une teneur pondérale en chrome comprise entre 10 et 20% en poids, et de préférence entre 10 et 16% en poids.

19. Echangeur selon l'une des revendications 15 et 16 dans lequel l'alliage présente une teneur en Ni supérieure à 25% et une teneur en Cr de 10 à 30%.

20. Echangeur selon l'une des revendications précédentes dans lequel les éléments sont au contact de l'oxygène ou du mélange à base d'oxygène, sont portés à une température comprise entre 300 et 900°C et de préférence entre 400 et 700°C.

21. Echangeur selon l'une des revendications précédentes dans lequel un détecteur d'oxygène est disposé au contact du gaz caloporteur, lequel est connecté à une alarme lorsque la teneur en oxygène est supérieure de plus de 1% de celle du gaz caloporteur.

22. Utilisation d'un échangeur suivant l'une quelconque des revendications précédentes pour chauffer de l'oxygène ou un mélange gazeux comportant au moins 30% d'oxygène jusqu'à une température à la sortie de l'échangeur qui n'est pas inférieure à 300°C et de préférence supérieure à 400°C, l'oxygène ou le gaz riche en oxygène ainsi chauffé alimentant une combustion dans un four industriel non-verrier.

23. Utilisation suivant la revendication 22, dans laquelle le four industriel non-verrier est choisi parmi les fours à arc électrique, les fours de réchauffage, les fours et précalcinateurs de cimenterie, les fours de recyclage ou de refusion des métaux non ferreux, les fours de traitement des minerais de métaux non ferreux et les four de fabrication de céramiques.

24. Procédé de combustion dans un four industriel non-verrier avec obtention de produits chauds et de gaz de combustion, ledit procédé comprenant les étapes de :
- chauffer, dans un échangeur de chaleur suivant l'une quelconque des revendications 1 à 21, de l'oxygène ou un mélange gazeux comportant au moins 30% d'oxygène à une température à la sortie de l'échangeur n'est pas inférieure à 300°C et de préférence supérieure à 400°C, par échange de chaleur directe ou indirecte avec au moins une partie des gaz de combustion ou par échange indirect avec au moins une partie des produits chauds et
- alimenter l'oxygène ou le gaz riche en oxygène chauffé dans le four industriel en tant que comburant pour la combustion.

25. Procédé suivant la revendication 24, dans lequel le four industriel non-verrier est choisi parmi les fours à arc électrique, les fours de réchauffage, les fours et précalcinateurs de cimenterie, les fours de recyclage ou de refusion des métaux non ferreux, les fours de traitement des minerais de métaux non ferreux et les four de fabrication de céramiques.
